# FASCICULE DE BREVET EUROPEEN

(11) **EP 1 493 613 B1**
(45) Date de publication et mention de la délivrance du brevet: **21.05.2008**
(21) Numéro de dépôt: 04356120.8
(22) Date de dépôt: 01.07.2004
(51) Int. Cl.: B60N 2/12, B60N 2/36, B60N 2/30

(54) **Siège de véhicule automobile**
Kraftfahrzeugsitz
Motor vehicle seat

(30) Priorité: 03.07.2003 FR 0308121
(43) Date de publication de la demande: 05.01.2005
(73) Titulaire: GRUPO ANTOLIN-INGENIERIA, S.A., 09080 Burgos (ES)
(72) Inventeur: Blanger, Vincent, 42000 Saint Etienne (FR); Chabanne, Jean-Pierre, 89710 Champvallon (FR); Faye, Patrick, 42210 Montrond Les Bains (FR)
(74) Mandataire: Delorme, Nicolas

(56) Documents cités:
- DE-A- 2 812 322
- DE-U- 20 109 600
- FR-A- 2 799 702
- US-A- 3 890 001

## Description

La présente invention concerne un siège de véhicule automobile.

Dans certains types de véhicules, les sièges présentent une structure permettant leur escamotage dans le plancher.

A cet effet, des sièges prévoient que le dossier puisse être rabattu contre l'assise et, simultanément, l'assise constituée d'un parallélogramme déformable s'écrase dans le plancher.

Dans une telle configuration, le siège présente un plus faible encombrement que lorsqu'il est dans une configuration où le dossier est sensiblement à la verticale de l'assise. Ceci permet d'augmenter le volume de chargement du véhicule selon les besoins sans devoir ôter les sièges du véhicule.

Ce type de siège trouve son plein intérêt dans le cas de siège dit de rang 2 ou de rang 3, c'est-à-dire de sièges pour passagers arrières. Lorsque ces sièges sont escamotés, le volume de chargement de la partie arrière du véhicule est considérablement agrandi sans qu'il soit nécessaire de les retirer du véhicule.

Ces sièges escamotables par rabattement du dossier présentent, de plus, une fonction leur permettant d'être déplacés longitudinalement par rapport au plancher du véhicule. Ce déplacement longitudinal se fait par coulissement dans des rails présents dans le plancher.

Du fait de la mobilité longitudinale des sièges, lorsque ceux-ci sont escamotés, il arrive que, à l'intérieur d'une rangée de plusieurs sièges (typiquement une rangée de trois sièges), chaque siège appartenant à cette rangée se trouve à une position particulière par rapport au plancher. En d'autres termes, chaque siège est escamoté dans la position longitudinale dans laquelle il se trouvait. Par conséquent, au sein d'une rangée de sièges, ceux-ci en position escamotée peuvent ne pas être alignés dans la direction transversale du véhicule.

Or, ceci est tout à fait préjudiciable à la bonne géométrie de l'espace de chargement qui est ménagé par l'escamotage de siège puisque cet espace présente alors des contours irréguliers du fait du désalignement dans le sens transversal des sièges escamotés.

Le document FR-A-2 799 702 décrit un siège possédant un bras d'articulation dont une extrémité coulisse dans un rail présentant une lumière. Ce bras d'articulation provoque un déplacement vers l'arrière du siège lors de son repliement, mais le principe mécanique d'un coulissement dans une lumière induit des frottements, du bruit et, in fine, un important risque de coincement du bras.

Un but de l'invention est donc de proposer un siège de véhicule réglable longitudinalement qui, lorsqu'il est escamoté occupe une position prédéterminée par rapport au plancher du véhicule et ce, avec une grande fiabilité de fonctionnement.

L'invention a pour objet un siège pouvant être placé sur une structure d'un véhicule automobile, présente une assise sur laquelle est articulé en rotation un dossier, et est mobile en translation par rapport à la structure du véhicule.

Le siège comprend un mécanisme de positionnement du siège lié, d'une part au siège et d'autre part, à la structure du véhicule permettant de déplacer le siège jusqu'à un emplacement prédéterminé de la structure du véhicule lors de la rotation du dossier en direction de l'assise, ledit mécanisme comprenant :
- une bielle dite de transmission à l'une de ses extrémités liée en rotation au dossier, et
- une bielle dite d'appui, à l'une de ses extrémités, liée en rotation à la structure du véhicule, ces deux bielles étant liées en rotation l'une à l'autre à leur seconde extrémité, la rotation du dossier vers l'assise entraînant
- une rotation de la bielle d'appui dans une position fixe dans laquelle la bielle est en appui contre une butée fixe par rapport à la structure du véhicule,
- puis un déplacement du siège vers une position prédéterminée par la transmission par la bielle de transmission du mouvement de rotation du dossier en un mouvement de translation du siège.

Ainsi, le siège selon l'invention se replace à une position prédéterminée lorsqu'il est escamoté et, ce, grâce à un mécanisme comprenant deux bielles articulées dont le fonctionnement est sans risque de coincement ou de blocage.

De façon avantageuse, le siège comprend deux rails parallèles pouvant être encastrés dans la structure du véhicule, dans lesquels coulisse l'assise, l'un des rails recevant une ferrure présentant un axe d'articulation de la bielle d'appui et une butée contre laquelle la bielle d'appui vient en appui lors de la rotation du dossier.

En vue de l'escamotage du siège, l'assise comprend deux flasques de piètement coulissant dans chacun des rails et deux brancards d'assise reliés à chacun des flasques par un montant avant et deux biellettes.

Pour permettre une inclinaison du dossier, celui-ci est constitué de :
- deux flasques inférieurs de dossier reliés aux deux flasques de piétement et aux brancards d'assises, et
- deux flasques supérieurs de dossier articulés sur les deux flasques inférieurs de dossier.

Pour sa bonne compréhension, l'invention est décrite en référence aux dessins annexés montrant à d'exemple non limitatif une forme de réalisation d'un siège selon l'invention.
Figure 1 montre en perspective la structure de ce siège,
Figures 2 à 4 représentent selon plusieurs positions successives une forme de réalisation d'un mécanisme de positionnement du siège à un emplacement prédéterminé.

Dans la description qui suit les termes longitudinal, transversal avant, arrière, supérieur et inférieur se référent au référentiel véhicule.

De manière classique, le siège portant la référence générale 1, présente une assise 2 sur laquelle est articulé un dossier 3.

L'assise 2 du siège comprend deux flasques de piétement 4 et deux brancards d'assise 5, la liaison entre les flasques de piètement 4 et les brancards d'assise 5 étant réalisée par un montant 6 en forme d'échelle et deux biellettes 7.

L'ensemble formé par les flasques de piètement 4, le montant 6, les brancards d'assise 5 et les biellettes 7 constitue un parallélogramme déformable puisque ces éléments sont reliés par des axes de liaison autorisant une rotation.

On note également qu'un réseau d'entretoises 8 assure la cohésion de l'assise dans la direction transversale.

La partie inférieure de chaque flasque de piétement 4 présente un patin 9 qui coulisse dans un rail 10.

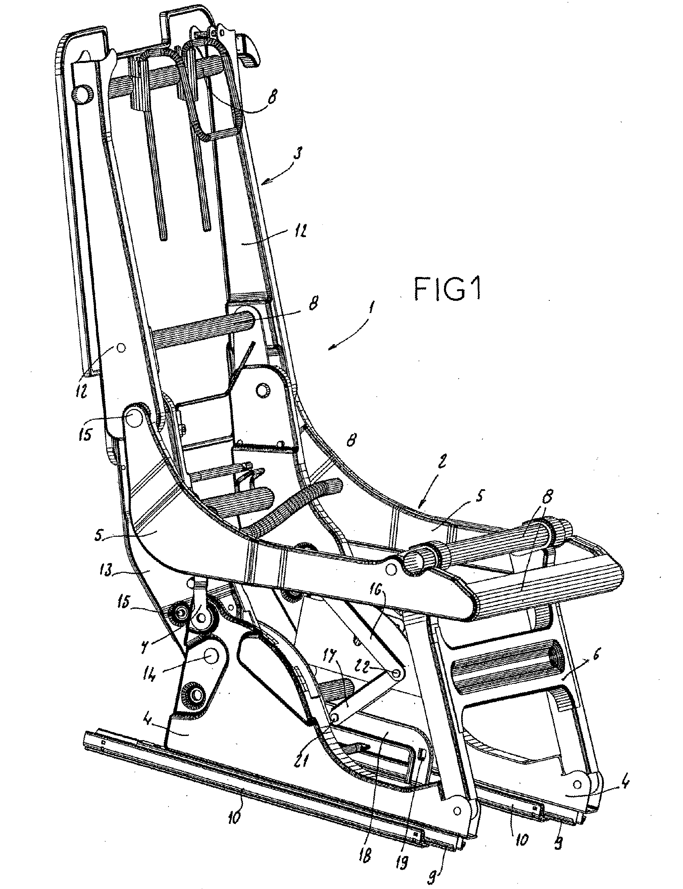

En ce qui concerne le dossier 3, dans l'exemple de siège représenté sur la figure 1, il s'agit d'un dossier dont l'inclinaison peut être réglée. A cet effet, le dossier 3 est constitué de deux flasques supérieurs de dossier 12 et de deux flasques inférieurs de dossier 13 ; la liaison entre les deux flasques supérieurs de dossier 12 et les deux flasques inférieurs de dossier 13 est réalisée par un mécanisme classique à secteur denté permettant de régler l'inclinaison de la partie du dossier formée par les flasques supérieurs 12 par rapport à sa partie formée par les flasques inférieurs 13.

Chacun des flasques inférieurs de dossier 13 est relié à l'assise du siège 1 d'une part par un axe de rotation 14 au niveau du flasque de piètement 4 et par un axe de rotation 15 au niveau de l'extrémité arrière du brancard d'assise 5.

Le dossier 3 présente également un réseau d'entretoises 8 assurant la liaison dans la direction transversale entre chacun des flasques supérieur et inférieur le constituant.

La particularité du siège selon l'invention est qu'il est pourvu d'un mécanisme comprenant une bielle dite bielle de transmission 16 liée par un axe de rotation 20 à l'une de ses extrémités au flasque inférieur de dossier 13 et une seconde bielle dite bielle d'appui 17 liée par un axe de rotation 21 au rail 10 par l'intermédiaire d'une ferrure 18 sensiblement en forme de U inversé. On remarque que la ferrure 18 présente une butée 19 dont la fonction apparaîtra plus loin. La bielle de transmission 16 et la bielle d'appui 17 sont liées entre elles par un axe d'articulation 22.

Le siège 1 ainsi défini constitue une entité autonome qui peut être placée dans le plancher d'un véhicule en cours de fabrication.

Les rails 10 sont fixés sur le plancher de ce véhicule et fonctionnellement deviennent partie intégrante de celui-ci. Le siège peut donc coulisser longitudinalement d'avant en arrière dans ses rails 10. Un système de blocage qui ne sera pas décrit permet de bloquer le siège dans une position souhaitée par l'occupant de celui-ci par rapport aux rails 10.

Grâce à leurs articulations en rotation 20,21,22 , les bielles de transmission 16 et d'appui 17 n'entravent nullement le mouvement de déplacement d'avant en arrière du siège 1 par rapport aux rails sur lesquels il peut coulisser.

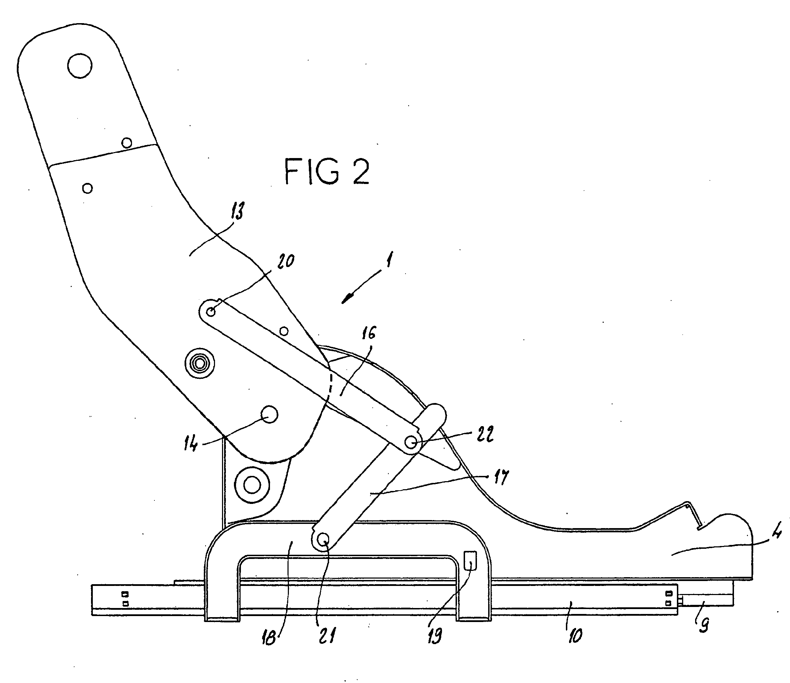

L'escamotage du siège 1 va être explicité en liaison avec les figures 2 à 4 représentant un siège sur lequel les brancards d'assise 5, le montant avant 6 et les flasques supérieurs de dossier 12 ne sont pas représentés pour plus de clarté.

La figure 2 représente le siège 1 dans une position non escamotée, c'est-à-dire une position dans laquelle le dossier (dont seul la partie inférieure apparaît sur cette figure) est sensiblement dans une position proche de la verticale et peut donc accueillir un passager.

Le déplacement longitudinal du siège 1 par rapport au rail se traduit par une déformation du mécanisme formé par la bielle d'appui 17 et la bielle de transmission 16.

De manière classique, le siège présente des organes de verrouillage par rapport aux rails 10 qui ne seront pas décrits de manière plus approfondie. Ces organes de verrouillage permettent de bloquer le siège dans une position longitudinale souhaitée.

Lorsque l'on souhaite escamoter le siège, une action est exercée sur le dossier pour le rabattre en direction de l'assise.

Bien que cela ne soit pas représenté sur les figures 2 à 4, on comprend alors que l'assise 2, qui présente une structure de parallélogramme, se déforme pour venir s'écraser sur le plancher. Il s'agit là d'une structure classique de siège escamotable.

En revanche, la particularité du siège, objet de l'invention, est que grâce au mécanisme constitué par les bielles de transmission 16 et par la bielle d'appui 17, le siège 1 glisse dans les rails 10 jusqu'à un emplacement prédéterminé.

Au cours de la rotation du dossier 3, au delà d'une certaine angle, les organes de verrouillage se désengagent des rails 10. Le siège est alors libre de se déplacer longitudinalement par rapport à ces derniers.

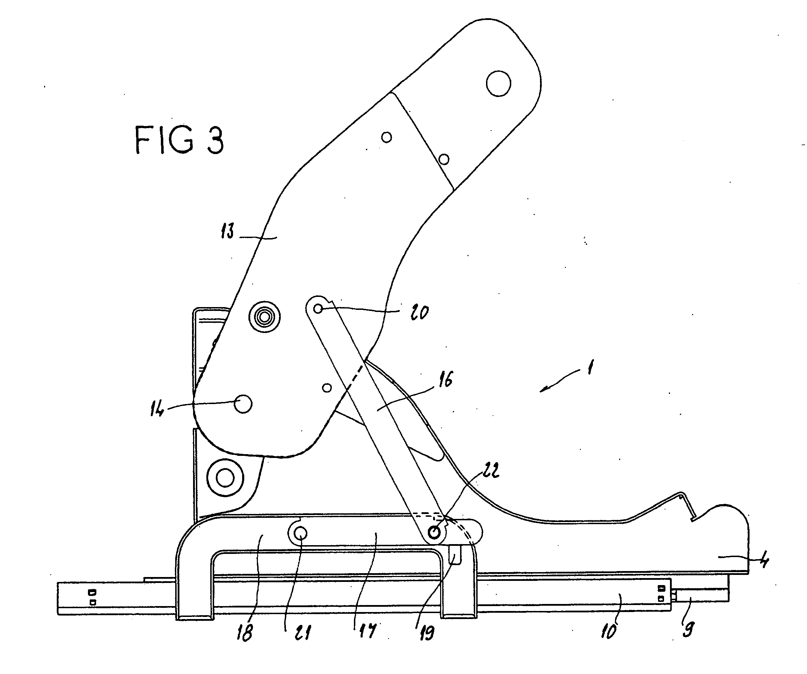

En effet, et, donc, du flasque inférieur 13 en direction de l'assise, la bielle d'appui 17, comme on peut le voir sur la figure 3, vient en appui contre la butée 19 présente sur la ferrure 18.

On rappelle ici qu'un point important de la structure de siège est que la ferrure 18 est fixe par rapport au rail 10, c'est-à-dire est fixe par rapport au plancher sur lequel le siège est monté. Structurellement, la ferrure 18 s'apparente à un élément de la structure du véhicule.

Lorsque le siège se trouve donc dans la configuration représentée à la figure 3, la bielle d'appui 17 se trouve dans une position fixe par rapport à la ferrure 18.

Par conséquent, la rotation, que le flasque inférieur de dossier 13 continue de subir pour arriver en contact de l'assise, se traduit alors par une translation vers l'arrière (dans la forme de réalisation représentée sur les figures).

En effet, la bielle de transmission 16 est donc fixe à son extrémité liée à la bielle d'appui 17 et le mouvement de rotation du dossier se traduit par une poussée exercée sur le siège par cette bielle dans la direction longitudinale.

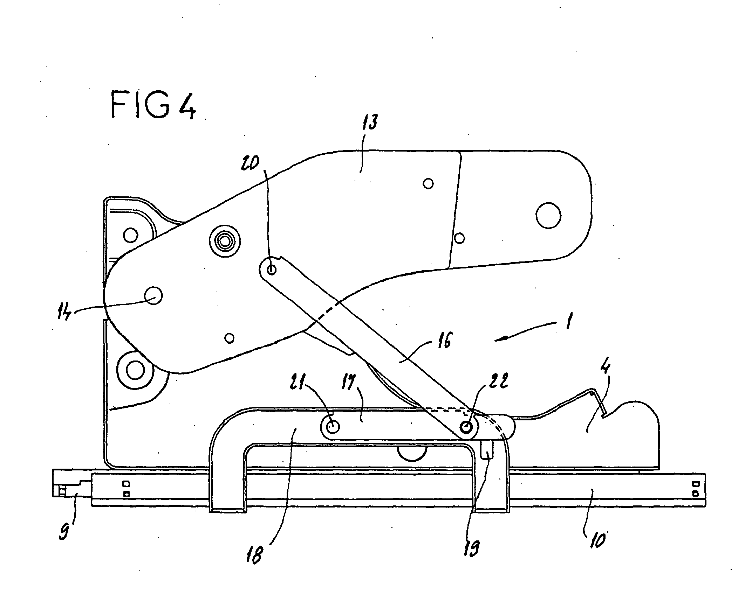

La figure 4 représente le siège lorsque le dossier est totalement rabattu. Le mécanisme constitué de la bielle de transmission 16 et de la bielle d'appui 17 permet ainsi de replacer le siège lorsqu'il est en position escamotée toujours à la même position quelque soit la position de départ du siège, c'est-à-dire quelque soit la position qu'occupe le siège par rapport au rail 10. Cette position est déterminée, d'une part, par la longueur de la bielle de transmission et de la bielle d'appui et, d'autre part, par la position longitudinale de l'axe de rotation 21 liant l'extrémité de la bielle d'appui par rapport à la ferrure 18, c'est-à-dire par rapport à la structure du véhicule.

L'invention ainsi décrite présente les nombreux avantages indiqués ci-dessus puisqu'elle permet de replacer un siège escamotable à une position prédéterminée par rapport au plancher du véhicule dans lequel il est monté, tout en préservant la mobilité longitudinale de ce siège.

Bien entendu, l'invention n'est pas limitée à la forme de réalisation décrite ci-dessus à titre d'exemples non limitatifs mais elle en embrasse au contraire toutes les variantes de réalisation. Ainsi, si dans l'exemple représenté sur le dessin la position prédéterminée du siège dans sa position escamotée se situe en arrière du véhicule, il est bien sûr possible de prévoir que cette position prédéterminée se situe en avant du véhicule et pour ce faire, il suffit d'inverser l'angle d'orientation des bielles d'appui et de transmission l'une par rapport à l'autre.

On peut, par ailleurs, envisager de fixer la bielle d'appui directement sur le plancher du véhicule.

## Revendications

1. Siège (1) pouvant être placé sur une structure d'un véhicule automobile, présentant une assise (2) sur laquelle est articulé en rotation un dossier (3), et étant mobile en translation par rapport à la structure du véhicule, comprenant un mécanisme de positionnement du siège (1) lié, d'une part au siège (1) et d'autre part, au plancher du véhicule permettant de déplacer le siège (1) jusqu'à un emplacement prédéterminé de la structure du véhicule lors de la rotation du dossier (3) en direction de l'assise (2), **caractérisé en ce que** le mécanisme comprend :
- une bielle dite de transmission (16) à l'une de ses extrémités liée en rotation au dossier (3) et
- une bielle dite d'appui (17), à l'une de ses extrémités, liée en rotation à la structure du véhicule, ces deux bielles (16, 17) étant liées en rotation l'une à l'autre à leur seconde extrémité, la rotation du dossier (3) vers l'assise (2) entraînant
- une rotation de la bielle d'appui dans une position fixe dans laquelle la bielle est en appui contre une butée fixe par rapport à la structure du véhicule,
- puis un déplacement du siège (1) vers une position prédéterminée par la transmission par la bielle de transmission (16) du mouvement de rotation du dossier (3) en un mouvement de translation du siège (1).

2. Siège (1) selon la revendication 1, **caractérisé en ce qu'**il comprend deux rails (10) parallèles pouvant être encastrés dans la structure du véhicule, dans lesquels coulisse l'assise (2), l'un des rails (10) recevant une ferrure (18) présentant un axe d'articulation (21) de la bielle d'appui (17) et une butée (19) contre laquelle la bielle d'appui (17) vient en appui lors de la rotation du dossier (3).

3. Siège (1) selon la revendication 1 ou la revendication 2, **caractérisé en ce que** l'assise (2) comprend deux flasques de piètement (4) coulissant dans chacun des rails (10) et deux brancards d'assise (2) reliés à chacun des flasques par un montant avant (6) et deux biellettes (7) et le dossier (3) est articulé par rapport aux flasques de piètement et aux brancards.

4. Siège selon la revendication 3, **caractérisé en ce que** le dossier est constitué de :
- deux flasques inférieurs de dossier (13) reliés aux deux flasques de piétement (4) et aux brancards d'assises (5), et
- deux flasques supérieurs de dossier (12) articulés sur les deux flasques inférieurs de dossier (13).

## Claims

1. Seat (1) that can be placed on a motor vehicle structure, that has a seat part (2) on which a backrest (3) is rotationally articulated and that can move in translation with respect to the vehicle structure, comprising a seat (1) positioning mechanism connected on the one hand to the seat (1) and on the other hand to the floor of the vehicle, allowing the seat (1) to be moved to a predetermined location in the structure of the vehicle when the backrest (3) is rotated towards the seat part (2), **characterized in that** the mechanism comprises:
- a link rod called the transmission link rod (16) rotationally connected, at one of its ends, to the backrest (3), and
- a link rod called the bearing link rod (17) rotationally connected, at one of its ends, to the vehicle structure, these two link rods (16, 17) being rotationally connected to one another at their second end, the rotation of the backrest (3) towards the seat part (2) causing
- the bearing link rod to rotate into a fixed position in which the link rod bears against a stop that is fixed with respect to the vehicle structure,
- then the seat (1) to move into a predetermined position owing to the transmission, via the transmission link rod (16), of the rotational movement of the backrest (3) into a translational movement of the seat (1).

2. Seat (1) according to Claim 1, **characterized in that** it comprises two parallel rails (10), which can be sunk in the structure of the vehicle, in which the seat part (2) slides, one of the rails (10) receiving a fixture (18) having an articulation pin (21) for the bearing link rod (17) and a stop (19) against which the bearing link rod (17) comes to bear when the backrest (3) rotates.

3. Seat (1) according to Claim 1 or Claim 2, **characterized in that** the seat part (2) comprises two underframe side plates (4) sliding in each of the rails (10) and two seat part (2) side members connected to each of the side plates by a front upright (6) and two small link rods (7), and the backrest (3) is articulated with respect to the underframe side plates and to the side members.

4. Seat according to Claim 3, **characterized in that** the backrest consists of:
- two lower backrest side plates (13) connected to the two underframe side plates (4) and to the seat part side members (5), and
- two upper backrest side plates (12) articulated to the two lower backrest side plates (13).

## Patentansprüche

1. Sitz (1), der auf eine Struktur eines Kraftfahrzeugs platziert werden kann, ein Sitzteil (2) aufweist, an dem eine Rückenlehne (3) drehungsmäßig angelenkt ist, und bezüglich der Fahrzeugstruktur translatorisch beweglich ist, mit einem Mechanismus zur Positionierung des Sitzes (1), der einerseits mit dem Sitz (1) und andererseits mit dem Boden des Fahrzeugs verbunden ist und dank dessen der Sitz (1) bei der Drehung der Rückenlehne (3) in Richtung des Sitzteils (2) zu einer vorbestimmten Stelle der Fahrzeugstruktur verschoben werden kann, **dadurch gekennzeichnet, dass** der Mechanismus Folgendes umfasst:
- eine so genannte Übertragungsstange (16), die an einem ihrer Enden drehungsmäßig mit der Rückenlehne (3) verbunden ist, und
- eine so genannte Stützstange (17), die an einem ihrer Enden drehungsmäßig mit der Fahrzeugstruktur verbunden ist, wobei diese beiden Stangen (16, 17) an ihrem zweiten Ende drehungsmäßig miteinander verbunden sind, wobei die Drehung der Rückenlehne (3) zum Sitzteil (2)
- eine Drehung der Stützstange in eine feste Position, in der die Stange an einem bezüglich der Fahrzeugstruktur festen Anschlag anliegt und
- dann durch die Übertragung der Drehbewegung der Rückenlehne (3) mittels der Übertragungsstange (16) in eine Translationsbewegung des Sitzes (1) eine Verschiebung des Sitzes (1) in eine vorbestimmte Position veranlasst.

2. Sitz (1) nach Anspruch 1, **dadurch gekennzeichnet, dass** er zwei parallele Schienen (10) aufweist, die in der Fahrzeugstruktur eingelassen sein können und in denen das Sitzteil (2) gleitet, wobei eine der Schienen (10) einen Beschlag (18) aufnimmt, der eine Gelenkachse (21) der Stützstange (17) und einen Anschlag (19) aufweist, gegen den die Stützstange (17) bei der Drehung der Rückenlehne (3) in Anlage kommt.

3. Sitz (1) nach Anspruch 1 oder 2, **dadurch gekennzeichnet, dass** das Sitzteil (2) zwei in jeder der Schienen (10) gleitende Untergestellflansche (4) und zwei Rahmenwangen des Sitzteils (2), die über eine vordere Strebe (6) und zwei Arme (7) mit jedem der Flansche verbunden sind, umfasst und die Rückenlehne (3) bezüglich der Untergestellflansche und der Rahmenwangen angelenkt ist.

4. Sitz nach Anspruch 3, **dadurch gekennzeichnet, dass** die Rückenlehne aus Folgendem besteht:
- zwei unteren Rückenlehnenflanschen (13), die mit den beiden Untergestellflanschen (4) und den Sitzteilrahmenwangen (5) verbunden sind, und
- zwei oberen Rückenlehnenflanschen (12), die an den beiden unteren Rückenlehnenflanschen (13) angelenkt sind.
